# EUROPEAN PATENT APPLICATION

(11) **EP 2 579 149 A2**
(43) Date of publication of application: **10.04.2013**
(21) Application number: 11780749.5
(22) Date of filing: 29.03.2011
(51) Int. Cl.: G06F 9/44, G06F 17/00

(54) **SERVICE SCENARIO EDITING APPARATUS FOR AN INTELLIGENT ROBOT, METHOD FOR SAME, INTELLIGENT ROBOT APPARATUS AND SERVICE-PROVIDING METHOD FOR AN INTELLIGENT ROBOT**

(30) Priority: 12.05.2010 KR 20100044248
(71) Applicant: Future Robot Co., Ltd., Suwon-si, Gyeonggi-do 443-766 (KR)
(72) Inventor: SONG, Se Kyong, Seongnam-si Gyeonggi-do 463-060 (KR); LEE, Jun Young, Seoul 137-070 (KR)
(74) Representative: Engelhard, Markus
(86) International application number: PCT/KR2011/002134
(87) International publication number: WO 2011/142532

(57) **Abstract**

The present invention relates to a service scenario editing apparatus for an intelligent robot, to a method for same, to an intelligent robot apparatus and to a service providing method for an intelligent robot. More particularly, the service scenario editing apparatus comprises: an event editing unit which enables an inputted event and a service providing action to correspond to one another in consideration of a variety of environments, users, states or the like, in order to set states, and interconnects the set states with each other such that the event being inputted to the intelligent robot is edited to enable the intelligent robot to provide a service in accordance with the scenario established by a user; an action editing unit which edits an action of the intelligent robot for providing a service; a state editing unit which interconnects the event edited by the event editing unit and the action edited by the action editing unit; and a scenario editing unit which interconnects the states edited by the state editing unit to edit a service scenario for an intelligent robot apparatus.

## Description

### [Technical Field]

The present invention relates to a service scenario editing device of an intelligent robot apparatus, a service scenario editing method, an intelligent robot apparatus, and a service-providing method of an intelligent robot apparatus and, more particularly, to a service scenario editing device of an intelligent robot apparatus, a service scenario editing method, an intelligent robot apparatus, and a service-providing method of an intelligent robot apparatus, which are configured to set up a state by matching an input event to a service-providing action based on various environments, users, conditions, etc. and to allow an intelligent robot to provide a service by connecting the set-up states based on a scenario set up by a user.

### [Background Art]

Recently, with the development of intelligent robot techniques, it is possible to provide various contents and services to users through intelligent robots. For example, these intelligent robots provide various contents and services such as news, weather, education content, scheduling, home monitoring, cleaning, etc. through communication with users, emotional responses to the users' commands, action responses in specific situations, etc.

Meanwhile, there are various types of intelligent robots such as public office information intelligent robots, housework guide intelligent robots, education service intelligent robots, pet intelligent robots, etc. depending on their uses.

However, these intelligent robots repeatedly or unilaterally operate based on algorithms programmed in laboratory environments at present and do not reflect the actual situations, which fails to meet the users' satisfaction.

Moreover, since the intelligent robots operate based only on the algorithms programmed in laboratory environments, it is also difficult for the users to modify the behaviors, expressions, etc. of the intelligent robots according to their own needs at the point of use.

These problems occur because the current intelligent service devices focus only on the operation of their functions, and thus it is impossible to reflect the interaction with the users in actual market situations. Moreover, in the provision of the services, only common services are provided, and thus it is difficult to adapt changes in surrounding environments, which leads to limitations in their application to the markets.

Accordingly, in a state where only developers can develop and operate programs, the capabilities of the robots are fixed, and thus it is difficult to use the robots in various fields, which leads to limitations of the services. As a result, it is impossible to meet the demands of various users.

### [Disclosure]

### [Technical Problem]

Accordingly, the present invention has been made to solve the above-described problems, and an object of the present invention is to allow an intelligent robot to provide a service to a user based on a series of scenarios related to the movements of the robot through an interaction with the user and to allow the user to easily produce and edit a service scenario at the point of use so as to directly connect the user's state or need to the intelligent robot, thus improving the user's satisfaction, increasing differentiation and sophistication of the robot's services, and expanding the market of service robots.

### [Technical Solution]

To accomplish the above objects, an aspect of the present invention provides a service scenario editing device of an intelligent robot apparatus. The service scenario editing device includes a storage and a processor and comprises: an event editing unit which edits an event input to an intelligent robot; an action editing unit which edits an action of the intelligent robot for providing a service; a state editing unit which edits a state by connecting the event edited by the event editing unit to the action edited by the action editing unit; and a scenario editing unit which edits a service scenario provided by the intelligent robot apparatus by connecting the states edited by the state editing unit.

The event editing unit edits information contained in an input information database as an input event, and the input information database contains information on a user of the intelligent robot, an environment in which the intelligent robot is used, a state of the intelligent robot, etc.

The action editing unit edits the action of the intelligent robot based on information contained in an action information database, and the action information database comprises an emotion database, a voice database, an action database, etc.

The state editing unit lists and stores the relationship between the event and the action which are connected to each other.

The scenario edited by the scenario editing unit is any one of an order type, a circulation type, a tree type, and a mixed type.

In another aspect, an intelligent robot apparatus, which provides a service based on a scenario edited by a user, comprises: an input sensor; a scenario editing device which sets up a state by connecting an event to an action and edits a scenario by connecting the set-up states; a scenario engine which selects a scenario edited by the scenario editing device and performs the scenario based on the event corresponding to information detected by the input sensor; and a service driving unit which provides a service based on the scenario performed by the scenario engine.

The input sensor recognizes information on a user of an intelligent robot, an environment in which the intelligent robot is used, a state of the intelligent robot, etc.

The scenario editing device comprises: an event editing unit which edits an event input to the intelligent robot; an action editing unit which edits an action of the intelligent robot for providing a service; a state editing unit which edits a state by connecting the event edited by the event editing unit to the action edited by the action editing unit; and a scenario editing unit which edits a service scenario provided by the intelligent robot apparatus by connecting the states edited by the state editing unit.

The scenario engine selects a scenario edited by the scenario editing device, and the service driving unit is driven such that the intelligent robot provides a service according to the action corresponding to the event based on the information recognized by the input sensor as an input event.

The service driving unit comprises: an emotion generation unit which expresses an emotion; a voice generation unit which outputs a voice; and an action unit which provides a movement.

The emotion generation unit expresses an emotion as an image through a display window, the voice generation unit outputs voice data such as music, dialogue, warning, etc., and the action unit makes a movement, a gesture, etc. of the intelligent robot.

In still another aspect, a service scenario editing method of an intelligent robot apparatus comprises: an event editing step of editing, at an event editing unit, an event input to an intelligent robot; an action editing step of editing, at an action editing unit, an action of the intelligent robot for providing a service; a state editing step of editing, at a state editing unit, a state by connecting the event edited by the event editing unit to the action edited in the action editing step; and a scenario editing step of editing, at a scenario editing unit, a service scenario provided by the intelligent robot apparatus by connecting the states edited in the state editing step.

The event editing step edits information contained in an input information database as an input event, and the input information database contains information on a user of the intelligent robot, an environment in which the intelligent robot is used, a state of the intelligent robot, etc.

The action editing step edits the action of the intelligent robot based on information contained in an action information database, and the action information database comprises an emotion database, a voice database, an action database, etc.

The state editing step lists and stores the relationship between the event and the action which are connected to each other.

The scenario edited in the scenario editing step is any one of an order type, a circulation type, a tree type, and a mixed type.

In yet another aspect, a service-providing method of an intelligent robot apparatus, which provides a service based on a scenario edited by a user, comprises: a scenario editing step of setting up, at scenario editing device, a state by connecting an event to an action and editing a scenario by connecting the set-up states; a step of detecting and transmitting, at an input sensor, information to a scenario engine; a step of selecting, at the scenario engine, a scenario edited in the scenario editing step based on the event corresponding to the information transmitted from the input sensor; and a step of providing a service based on the selected scenario.

The scenario editing step comprises: an event editing step of editing, at an event editing unit, an event input to an intelligent robot; an action editing step of editing, at an action editing unit, an action of the intelligent robot for providing a service; a state editing step of editing, at a state editing unit, a state by connecting the event edited by the event editing unit to the action edited in the action editing step; and a scenario editing step of editing, at a scenario editing unit, a service scenario provided by the intelligent robot apparatus by connecting the states edited in the state editing step.

### [Advantageous Effects]

It is possible to create the best scenario through interaction between users and various devices for providing contents as well as the intelligent service apparatus.

Moreover, with the use of the present invention, it is possible to eliminate the complexity of the service apparatus and create a scenario, which allows a user, not a developer, to edit and improve the service scenario, thus providing enhanced services to various markets.

Moreover, with the application of the scenario editor to the existing device, it is possible to improve the operation of the functions and the service satisfaction. Furthermore, the existing device is used as it is, and thus it is possible to reduce the time, manpower, and cost of developing a new intelligent device and to effectively apply the present invention to unmanned service markets in various fields for a short time.

### [Description of Drawings]

FIG. 1 shows a basic concept of editing a scenario according to the present invention.
FIG. 2 shows the action performed by an intelligent robot based on an input event according to the present invention.
FIG. 3 shows various examples of scenario types according to the present invention.
FIG. 4 shows the configuration of a scenario editing device according to the present invention.
FIG. 5 shows the configuration of an input information database according to the present invention.
FIG. 6 shows the configuration of an action information database according to the present invention.
FIG. 7 shows the process of editing a scenario according to the present invention.
FIG. 8 shows that an intelligent robot provides a service according to the present invention.

### [Mode for Invention]

Hereinafter, the configuration and operation in accordance with preferred embodiments of the present invention will be described with reference to the accompanying drawings.

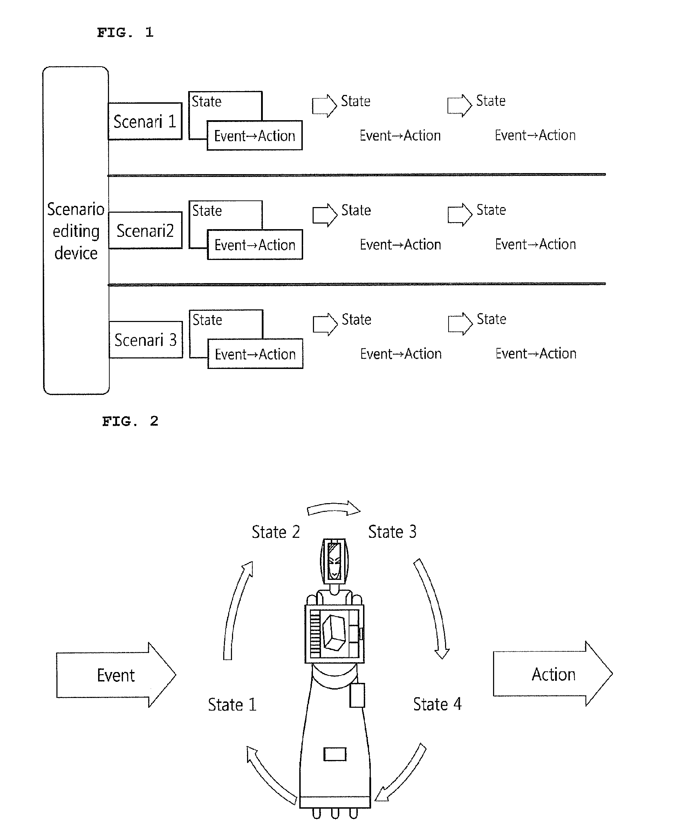

FIG. 1 shows a basic concept of editing a scenario according to the present invention.

As shown in FIG. 1, an input event and an action of a robot, which operates in response to the input event, are set up as a state, and the set-up states are connected to each other, thus constructing a scenario. A scenario editing device edits the scenario by editing the event, the action, and the state, which constitute the scenario, and connecting the states to each other.

Moreover, due to the presence of a variety of events, actions, and states, these are created as each scenario such that a user can select and use an appropriate scenario if necessary.

That is, scenarios 1, 2, and 3 may be created such that a required scenario is selected and used.

FIG. 2 shows the action performed by an intelligent robot based on an input event according to the present invention.

As shown in FIG. 2, when an event is input, an intelligent robot performs an action based on the event. Here, the action of the intelligent robot may vary depending on the input event, and each action is set up as a state such that the intelligent robot performs an appropriate action depending on the state.

For example, when a specific event is input, the intelligent robot moves in state 1, displays an emotion on a screen in state 2, outputs a voice in state 3, and moves its head in state 4 based on a scenario. These states may be repeatedly performed or a new state may be performed by another input event.

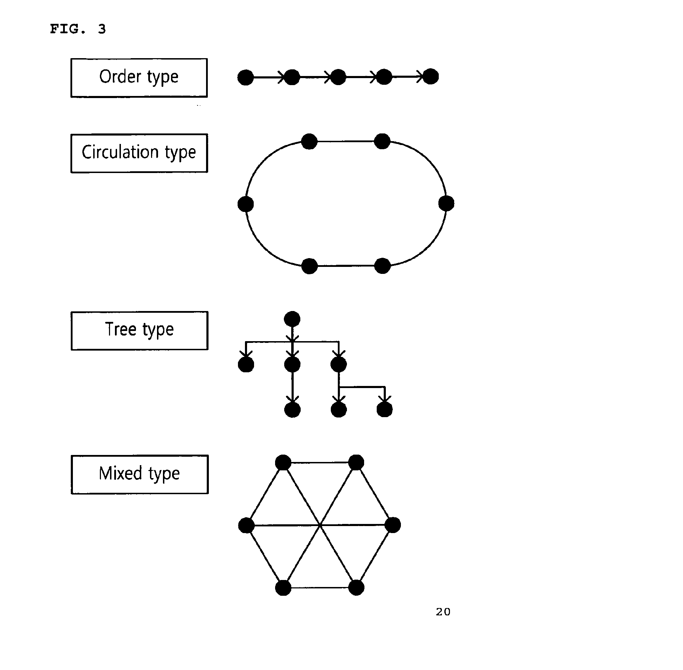

FIG. 3 shows various examples of scenario types according to the present invention.

As shown in FIG. 3, the scenario may have various types.

According to an order type scenario, one state is connected to another state, and the scenario is terminated with an action in the final state.

According to a circulation type scenario, the scenario starts from one state, undergoes various states, and returns to the original state.

According to a tree type scenario, with respect to one state, various states are introduced such that the scenario is performed in various states.

According to a mixed type scenario, the order type scenario, the circulation type scenario, and the tree type scenario are all mixed up to be performed in order in a specific state, circulated in another state, and performed in the tree type in still another state.

As such, it is possible to edit various types of scenarios by means of the scenario editing device, which is convenient to the user and facilitates the edition, and thus the user can edit and use the scenario in a more appropriate manner to the environment.

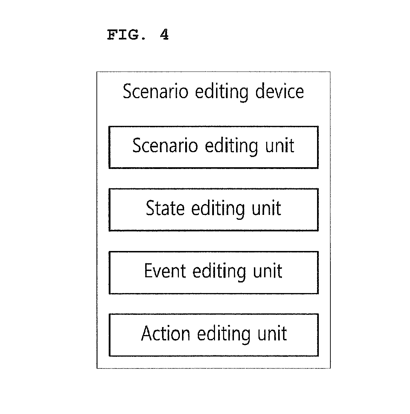

FIG. 4 shows the configuration of a scenario editing device according to the present invention.

As shown in FIG. 4, the scenario editing device comprises: an event editing unit which edits an event input to an intelligent robot; an action editing unit which edits an action of the intelligent robot for providing a service; a state editing unit which connects the event edited by the event editing unit to the action edited by the action editing unit; and a scenario editing unit which edits a service scenario provided by an intelligent robot apparatus by connecting the states edited by the state editing unit.

The event editing unit edits the event input to the intelligent robot, and the event refers to information detectable by an input sensor of the intelligent robot. The intelligent robot operates based on the information detected by the sensor, and thus the event is edited as input information for the action of the intelligent robot.

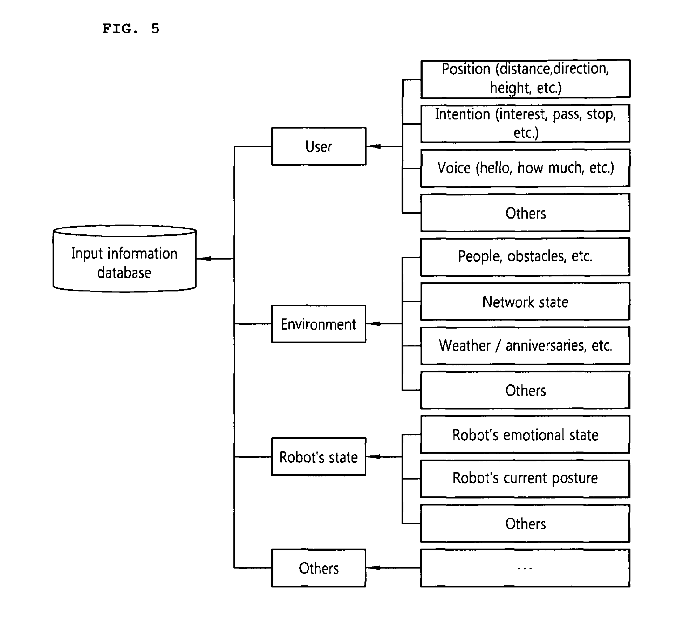

As shown in FIG. 5, the event editing unit edits information contained in an input information database as an input event. The input information database contains a user, an environment, a state of the intelligent robot, and other various information.

Specifically, in the user's state, the position of the user who uses the intelligent robot, the direction in which the user moves, or the physical condition of the user such as height may be considered as the input event. Depending on the user's position, it is necessary for the intelligent robot to move and reach the user, and the direction of the movement should also be considered to reach the user. Moreover, depending on the physical condition of the user, if the user is short, it is necessary to lower the height of the robot and, if the user is tall, it is necessary to increase the height of the robot.

The intention of the user should also be considered. The user may reach the robot with interest or may go past the robot. Moreover, the user may be stopped near to robot. Depending on each of these events, it is necessary for the robot to consider how to act, and thus this event should be considered as the input information.

Moreover, the user may speak to the robot, may sing a song, or may shout out for emergency. Here, it is necessary for the robot to operate in response to each of these situations, and thus it is necessary to consider each of these cases as an input event.

Besides, there may be more than one user, and it is also necessary for the robot to operate in response to each of these users. Thus, it is necessary to consider each of these cases as an input event.

As well as the user, the environment in which the robot is used should also be considered. The weather or obstacle around the robot and the network environment for sharing information should also be considered.

That is, the operation condition of the robot may vary depending on the surrounding weather and, when there is an obstacle, the robot should avoid the obstacle. Moreover, the robot may have to receive necessary information through a network, and thus it is necessary to consider each of these cases as an input event.

Furthermore, when the robot takes a posture and expresses an emotion, the robot may have to take another posture and express another emotion. In this case, it is also necessary for the robot to consider how to act. Thus, it is necessary to consider each of these cases as an input event.

The action editing unit edits the action of the intelligent robot for providing a service. Here, the action refers to a behavior or expression of the intelligent robot. That is, the action is edited to determine the behavior or expression of intelligent robot to be performed in response to the input event.

The action editing unit edits the action of the intelligent robot based on information contained in an action information database. The action information database comprises an emotion database, a voice database, an action database, etc.

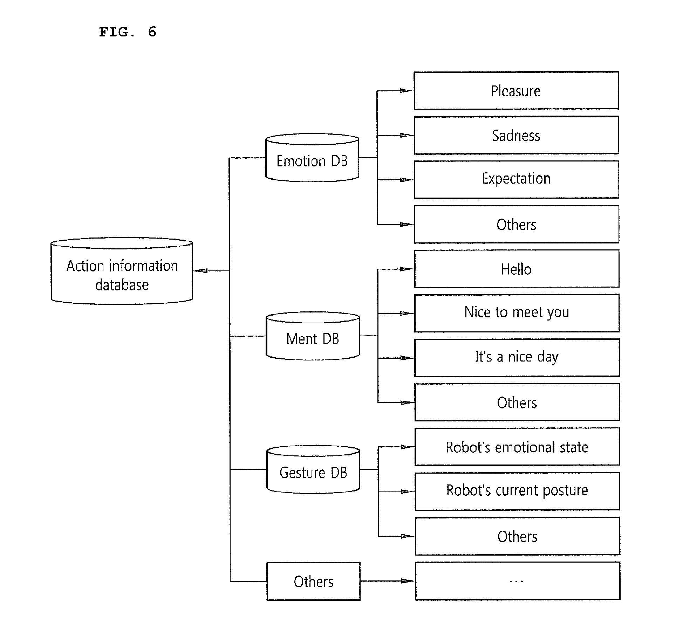

FIG. 6 shows the configuration of an action information database according to the present invention.

As shown in FIG. 6, the action information database comprises databases for expressing emotions, ments, gestures, etc.

An emotion DB expresses emotions such as pleasure, sadness, expectation, etc. and these emotions are expressed through a display window of the intelligent robot. For example, during pleasure, a smiling face is displayed on the display window, and during sadness, a crying face is displayed on the display window, thus expressing the emotions. That is, it is possible to display various videos, images, signs, letters, etc. on the display window, instead of the expression of the robot itself, and thus it is possible to express various emotions.

A ment DB allows the robot to do a ment with a voice. For example, the robot can say "Hello" when the user approaches the robot or can do a ment relating to the weather, such as "It's a nice day", depending on the surrounding weather. Moreover, when the user hits the robot, the robot can also do a ment such as "It hurts".

Furthermore, the robot can also play music that fits the situation if necessary.

A gesture DB allows the robot to perform movements. That is, the gesture DB expresses the movements of the robot such that the robot moves, moves its arm, or turns its head.

The state editing unit creates a state by connecting the edited case to the edited event. The state editing unit creates the state by connecting one action to one event. Here, a plurality of actions may be connected to one event. For example, event 1 may be connected to a plurality of actions such as action 1, action 2, action 3, etc. However, if action 1 connected to event 1 is set up as state 1, action 2 connected to event 1 is set up as state 2, and thus different states are set up.

The state editing unit selects an event edited by the event editing unit and an action edited by the action editing unit and edits the state by connecting the event and the action. As such, the state editing unit lists and stores the relationship between the event and the action with respect to each state.

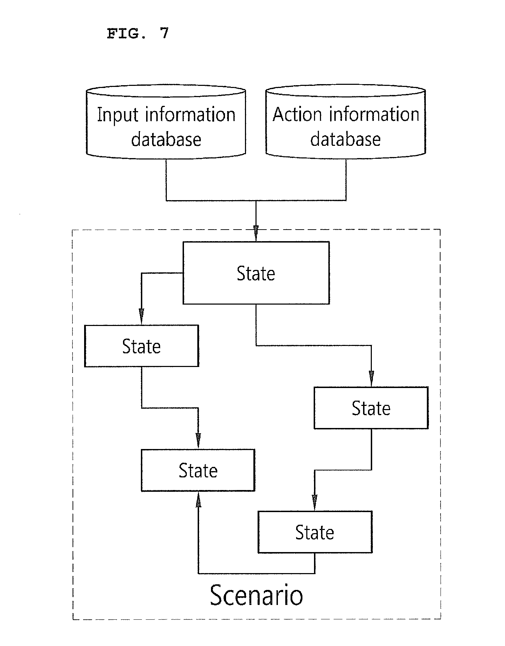

FIG. 7 shows the process of editing a scenario according to the present invention.

As shown in FIG. 7, the scenario editing unit edits a scenario by connecting the states to each other. The state is set up by connecting the event and the action, edited based on the input information database and the action information database, and the set-up states are connected to each other by the scenario editing unit, thus creating the scenario.

The created scenarios are stores and an appropriate scenario is selected to drive the intelligent robot if necessary.

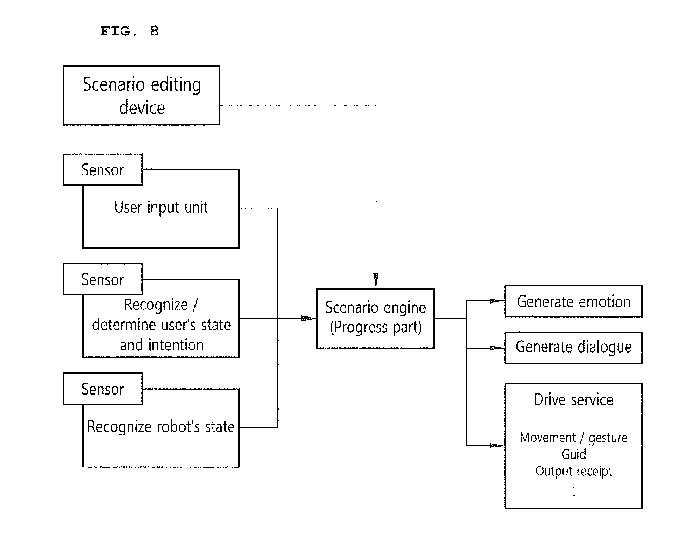

FIG. 8 shows that an intelligent robot provides a service according to the present invention.

That is, FIG. 8 shows that the scenario edited by the scenario editing device is selected and the intelligent robot is driven.

An intelligent robot apparatus comprises: an input sensor; a scenario editing device which sets up a state by connecting an event to an action and edits a scenario by connecting the set-up states; a scenario engine which selects a scenario edited by the scenario editing device and performs the scenario based on the event corresponding to information detected by the input sensor; and a service driving unit which provides a service based on the scenario performed by the scenario engine.

The input sensor recognizes information on a user of an intelligent robot, an environment in which the intelligent robot is used, a state of the intelligent robot, etc. The information recognized by the input sensor becomes an input event of the intelligent robot.

The scenario editing device comprises: an event editing unit which edits an event input to an intelligent robot; an action editing unit which edits an action of the intelligent robot for providing a service; a state editing unit which edits a state by connecting the event edited by the event editing unit to the action edited by the action editing unit; and a scenario editing unit which edits a service scenario provided by the intelligent robot apparatus by connecting the states edited by the state editing unit, which has been described above.

The scenario engine selects a scenario edited by the scenario editing device, and the service driving unit is driven such that the intelligent robot provides a service according to the action corresponding to the event based on the information recognized by the input sensor as an input event.

That is, the scenario engine receives the information of the input sensor, converts the information to an input event, and transmits a driving signal to the service driving unit such that the intelligent robot operates based on the scenario selected from the scenario editing device.

The service driving unit receives the driving signal from the scenario engine and drives the intelligent robot based on the received signal. Specifically, the service driving unit comprises: an emotion generation unit which expresses an emotion; a voice generation unit which outputs a voice; and an action unit which provides a movement.

The emotion generation unit expresses an emotion as an image through a display window, the voice generation unit outputs voice data such as music, dialogue, warning, etc., and the action unit makes a movement, a gesture, etc. of the intelligent robot.

A service scenario editing method of an intelligent robot apparatus comprises: an event editing step of editing, at an event editing unit, an event input to an intelligent robot; an action editing step of editing, at an action editing unit, an action of the intelligent robot for providing a service; a state editing step of editing, at a state editing unit, a state by connecting the event edited by the event editing unit to the action edited in the action editing step; and a scenario editing step of editing, at a scenario editing unit, a service scenario provided by the intelligent robot apparatus by connecting the states edited in the state editing step.

The event editing step edits information contained in an input information database as an input event, and the input information database contains information on a user of the intelligent robot, an environment in which the intelligent robot is used, a state of the intelligent robot, etc.

The action editing step edits the action of the intelligent robot based on information contained in an action information database, and the action information database comprises an emotion database, a voice database, an action database, etc.

The state editing step lists and stores the relationship between the event and the action which are connected to each other.

The scenario edited in the scenario editing step is any one of an order type, a circulation type, a tree type, and a mixed type.

Specific details of these features have been described above.

A service-providing method of an intelligent robot apparatus, which provides a service based on a scenario edited by a user, comprises: a scenario editing step of setting up, at scenario editing device, a state by connecting an event to an action and editing a scenario by connecting the set-up states; a step of detecting and transmitting, at an input sensor, information to a scenario engine; a step of selecting, at the scenario engine, a scenario edited in the scenario editing step based on the event corresponding to the information transmitted from the input sensor; and a step of providing a service based on the selected scenario.

The scenario editing step comprises: an event editing step of editing, at an event editing unit, an event input to an intelligent robot; an action editing step of editing, at an action editing unit, an action of the intelligent robot for providing a service; a state editing step of editing, at a state editing unit, a state by connecting the event edited by the event editing unit to the action edited in the action editing step; and a scenario editing step of editing, at a scenario editing unit, a service scenario provided by the intelligent robot apparatus by connecting the states edited in the state editing step.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A service scenario editing device of an intelligent robot apparatus, the service scenario editing device including a storage and a processor and comprising:
an event editing unit which edits an event input to an intelligent robot;
an action editing unit which edits an action of the intelligent robot for providing a service;
a state editing unit which edits a state by connecting the event edited by the event editing unit to the action edited by the action editing unit; and
a scenario editing unit which edits a service scenario provided by the intelligent robot apparatus by connecting the states edited by the state editing unit.

2. The service scenario editing device of claim 1, wherein the event editing unit edits information contained in an input information database as an input event, the input information database containing information on a user of the intelligent robot, an environment in which the intelligent robot is used, a state of the intelligent robot, etc.

3. The service scenario editing device of claim 1, wherein the action editing unit edits the action of the intelligent robot based on information contained in an action information database, the action information database comprising an emotion database, a voice database, an action database, etc.

4. The service scenario editing device of claim 1, wherein the state editing unit lists and stores the relationship between the event and the action which are connected to each other.

5. The service scenario editing device of claim 1, wherein the scenario edited by the scenario editing unit is any one of an order type, a circulation type, a tree type, and a mixed type.

6. An intelligent robot apparatus providing a service based on a scenario edited by a user, the intelligent robot apparatus comprising:
an input sensor;
a scenario editing device which sets up a state by connecting an event to an action and edits a scenario by connecting the set-up states;
a scenario engine which selects a scenario edited by the scenario editing device and performs the scenario based on the event corresponding to information detected by the input sensor; and
a service driving unit which provides a service based on the scenario performed by the scenario engine.

7. The intelligent robot apparatus of claim 6, wherein the input sensor recognizes information on a user of an intelligent robot, an environment in which the intelligent robot is used, a state of the intelligent robot, etc.

8. The intelligent robot apparatus of claim 6, wherein the scenario editing device comprises:
an event editing unit which edits an event input to the intelligent robot;
an action editing unit which edits an action of the intelligent robot for providing a service;
a state editing unit which edits a state by connecting the event edited by the event editing unit to the action edited by the action editing unit; and
a scenario editing unit which edits a service scenario provided by the intelligent robot apparatus by connecting the states edited by the state editing unit.

9. The intelligent robot apparatus of claim 6, wherein the scenario engine selects a scenario edited by the scenario editing device, and
wherein the service driving unit is driven such that the intelligent robot provides a service according to the action corresponding to the event based on the information recognized by the input sensor as an input event.

10. The intelligent robot apparatus of claim 6, wherein the service driving unit comprises:
an emotion generation unit which expresses an emotion;
a voice generation unit which outputs a voice; and
an action unit which provides a movement.

11. The intelligent robot apparatus of claim 10, wherein the emotion generation unit expresses an emotion as an image through a display window.

12. The intelligent robot apparatus of claim 10, wherein the voice generation unit outputs voice data such as music, dialogue, warning, etc.

13. The intelligent robot apparatus of claim 10, wherein the action unit makes a movement, a gesture, etc. of the intelligent robot.

14. A service scenario editing method of an intelligent robot apparatus, the method comprising:
an event editing step of editing, at an event editing unit, an event input to an intelligent robot;
an action editing step of editing, at an action editing unit, an action of the intelligent robot for providing a service;
a state editing step of editing, at a state editing unit, a state by connecting the event edited by the event editing unit to the action edited in the action editing step; and
a scenario editing step of editing, at a scenario editing unit, a service scenario provided by the intelligent robot apparatus by connecting the states edited in the state editing step.

15. The method of claim 14, wherein the event editing step edits information contained in an input information database as an input event, the input information database containing information on a user of the intelligent robot, an environment in which the intelligent robot is used, a state of the intelligent robot, etc.

16. The method of claim 14, wherein the action editing step edits the action of the intelligent robot based on information contained in an action information database, the action information database comprising an emotion database, a voice database, an action database, etc.

17. The method of claim 14, wherein the state editing step lists and stores the relationship between the event and the action which are connected to each other.

18. The method of claim 14, wherein the scenario edited in the scenario editing step is any one of an order type, a circulation type, a tree type, and a mixed type.

19. A service-providing method of an intelligent robot apparatus, which provides a service based on a scenario edited by a user, the service-providing method comprising:
a scenario editing step of setting up, at scenario editing device, a state by connecting an event to an action and editing a scenario by connecting the set-up states;
a step of detecting and transmitting, at an input sensor, information to a scenario engine;
a step of selecting, at the scenario engine, a scenario edited in the scenario editing step based on the event corresponding to the information transmitted from the input sensor; and
a step of providing a service based on the selected scenario.

20. The service-providing method of claim 19, wherein the scenario editing step comprises:
an event editing step of editing, at an event editing unit, an event input to an intelligent robot;
an action editing step of editing, at an action editing unit, an action of the intelligent robot for providing a service;
a state editing step of editing, at a state editing unit, a state by connecting the event edited by the event editing unit to the action edited in the action editing step; and
a scenario editing step of editing, at a scenario editing unit, a service scenario provided by the intelligent robot apparatus by connecting the states edited in the state editing step.
